# EUROPEAN PATENT APPLICATION

(11) **EP 1 666 205 A1**
(43) Date of publication of application: **07.06.2006**
(21) Application number: 04773171.6
(22) Date of filing: 16.09.2004
(51) Int. Cl.: B24D 18/00, B23C 5/10

(54) **FREE CURVED SURFACE PRECISION MACHINING TOOL**

(30) Priority: 19.09.2003 JP 2003327645
(71) Applicant: RIKEN, Wako-shi, Saitama 351-0198 (JP); Japan Science and Technology Corporation, Kawaguchi-shi, Saitama 332-0012 (JP); Ikegami Mold Engineering Co., Ltd., Kuki-shi, Saitama, 3460004 (JP)
(72) Inventor: OHMORI, Hitoshi, 3510198 (JP); YAMAKI, Hidenori, IKEGAMI MOLD ENGINEERING CO. LTD, Kuki-shi, Saitama 3640004 (JP); MATSUZAWA, Takashi IKEGAMI MOLD ENGINEERING CO LTD, Kuki-shi, Saitama 346004 (JP)
(74) Representative: Grünecker, Kinkeldey, Stockmair & Schwanhäusser Anwaltssozietät
(86) International application number: PCT/JP2004/013512
(87) International publication number: WO 2005/028159

(57) **Abstract**

A free curved surface precision machining tool for precision-machining a surface to be machined with the lower end in contact therewith by rotation around an axis x. It includes a drum-shaped tool having a rotation axis xorthogonal to the axis z and rotationally driven around the rotation axis x. This drum-shaped tool has a convex machining surface in the form of an arcuate rotary body obtained by rotating an arc of a radius r with the center at the intersection O between the axis z and the rotation axis x around the rotation axis x. The convex machining surface contacts the surface to be machined to precision-machine the latter, while the convex machining surface is rotated around the orthogonal axis x so as to disperse the machining position of the convex machining surface.

## Description

### BACKGROUND OF THE INVENTION

### Field of the Invention

The present invention relates to a free curved surface precision machining tool for precision-machining a free curved surface (more specifically, for precision-removing the free curved surface with grinding or cutting), having a convex machining section in the form of an arcuate rotary body at the lower end.

### Description of the Related Art

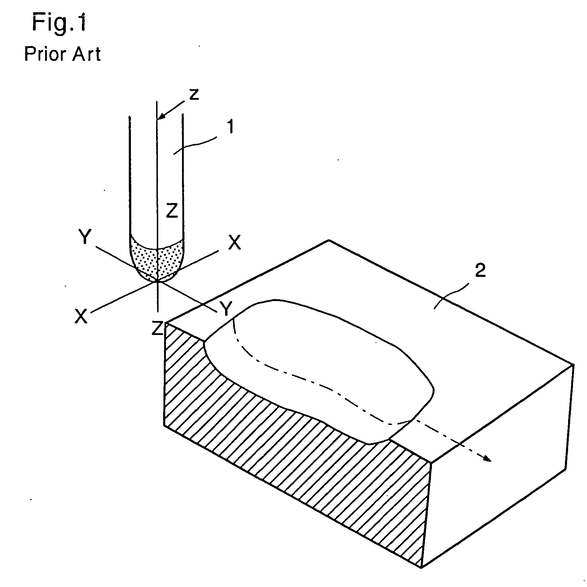

Referring to Fig. 1, there is typically shown machining (removal machining) of a free curved surface with a conventional free curved surface machining tool. The conventional free curved surface machining tool 1 is, for example, a ball nose grindstone or a ball end mill, which has a spherical machining surface at the lower end and is configured to rotate around the axis z. A free curved surface 2 is a part of, for example, a molding die, an aspherical lens, or the like. With high-speed rotation around the axis z, the free curved surface machining tool 1 machines the free curved surface 2 while relatively moving the lower end along the free curved surface 2. A free curved surface of a die, an aspherical lens, or the like can be freely formed with repetition of the machining using the machining tool 1.

Moreover, there has already been disclosed a free curved surface machining tool wherein the circumferential speed of the axis does not reach zero (0) in Patent Document 1.

The "free curved surface machining tool" in Patent Document 1 is a tool for machining a surface to be machined with the lower end in contact therewith by rotation around an axis z, including a spherical tool having at least a spherical machining section on the lower side thereof and a support bearing for supporting the spherical tool on a rotation axis a, which is different from the axis z and passes through the center of the spherical surface.

### [Patent Document 1]

Japanese Patent Laid-Open No. H10-156729

The free curved surface machining tool 1 shown in Fig. 1 rotates around the axis z and therefore the circumferential speed of the machining surface is zero (0) at the position of the axis (radius 0), by which the axis (radius 0) is the dead center of machining. Moreover, the radius of rotation significantly depends upon the position of the machining surface, and thus the circumferential speed and the rotation load largely fluctuate, which leads to a problem that the precision machining (high-precision and high-quality machining) cannot be performed. In addition, the free curved surface machining tool 1 has a problem that there is a need to maintain sharpness and an accurate spherical surface of the tool machining surface on a constant basis in order to achieve the machining function and precision.

Accordingly, it has conventionally been necessary to prepare a multi-axis NC machining apparatus having four or five axes wherein the axis z of the free curved surface machining tool 1 can be arbitrarily inclined during machining and a program creation therefor. This kind of program creation, however, is complicated and difficult, and further the increase in the number of axes requires an advanced technique in manufacturing the machining apparatus. This leads to a problem that the multi-axis NC machining apparatus having four or more axes capable of precision machining becomes expensive and poor in versatility.

The following gives more detailed description of the above problems in cases where precision machining is performed.

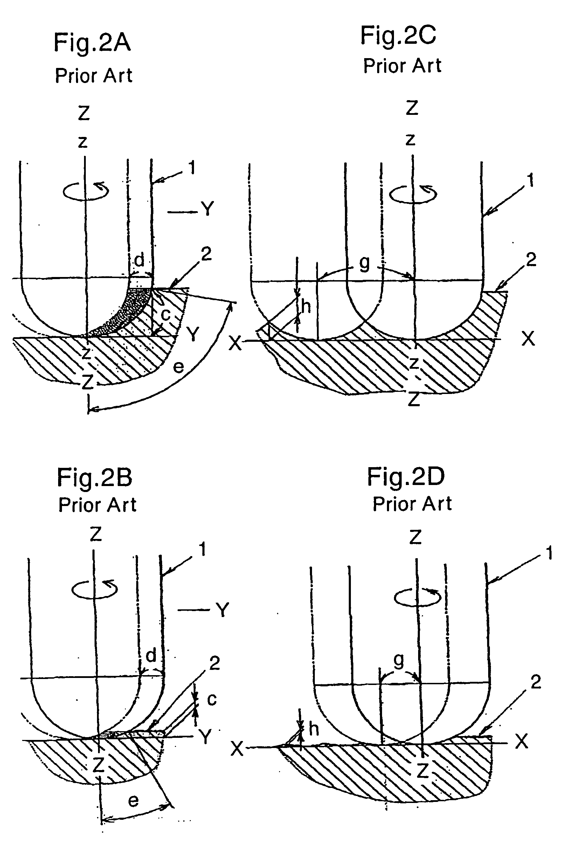

Referring to Figs. 2A to 2D, there are shown illustrations of machining portions, which are enlarged in some measure so as to be easy to understand. If the depth of the cut c (the depth of machining) is deep (Fig. 2A), the contact surface e is wide independently of the magnitude of feed d (a moving distance of the tool) unless the feed direction y (a direction of movement of the tool) is the vertical direction, and thus the main machining portion is far from the axis z. In this case, the roughness (concavity and convexity) of the surface to be machined is large (a plane roughness is large), but it does not become a problem since rough machining is mainly aimed for.

If the depth of the cut c is shallow (Fig. 2B), in other words, in precision machining, the contact surface e is narrow, and as the main machining portion comes close to the axis z, the roughness of the surface to be machined becomes small. In this case, however, the above matters in question such as the precision machining (high-precision and high-quality machining) and the need for maintaining the sharpness and the accurate spherical surface of the tool machining surface are coming to the fore.

Moreover, as well as the narrow contact surface e, the peripheral speed and the required driving torque undergo drastic changes according to the magnitude of the distance of the contact surface e from the axis (radius of rotation), thereby causing problems of irregularity in the roughness of the surface to be machined, a chatter mark (caused by vibration), or a decrease in machining accuracy.

On the other hand, the narrowing of the contact surface e causes a local convergence of the contact position or frequency of the machining tool according to the feature of the free curved surface to be machined, which results in a local convergence of portions where the machining function (the sharpness) declines and of deformations caused by contact friction, by which the deformations are reverse-transferred to the surface to be machined or the surface is damaged. These are magnified by the interaction.

In the NC grinding, it is essential to generate a new surface and to maintain an accurate spherical surface in the grinding section at all times in order to maintain the machining function and precision machining.

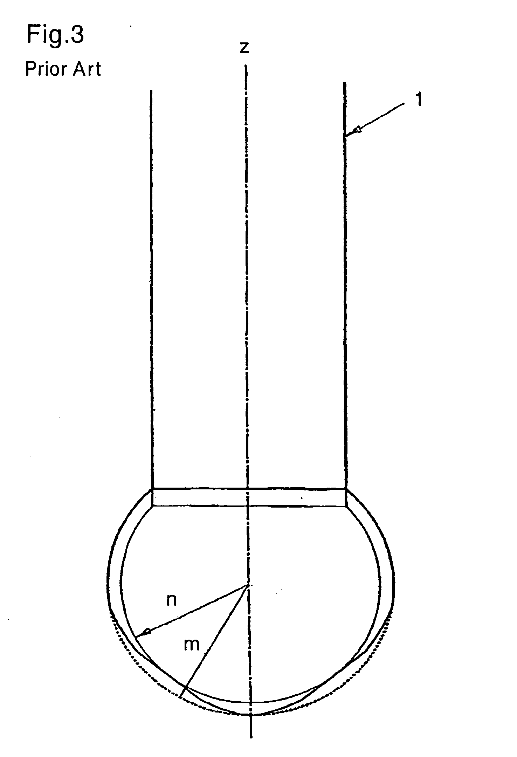

Referring to Fig. 3, there is shown an illustration of a deformation in a spherical grindstone and correction thereof, which is enlarged so as to be easy to understand. The deformation occurs more easily as the contact frequency is higher and it is farther from the axis, and once the deformation begins to occur, a reverse transfer occurs and thereby the deformation is accelerated. Therefore, if so, rapid correction is required. It is necessary to fair the shape until there is nothing left of the deformation by removal machining from the radius m of an old spherical surface to the radius n of a new spherical surface. It is, however, generally hard to correct the deformation in a situation where the deformation from the spherical surface is significant.

Therefore, there is a need to control a contact wear position and a contact frequency by inclining the axis z in such a way that the contact frequency of the grinding section is uniform over the entire surface thereof to reduce the need for the correction. Unless the axis z can be inclined arbitrarily, however, the grinding section is continuously and systematically corrected by using a setting value previously incorporated into the program, by which a large part of the spherical machining section is removed wastefully.

Moreover, the correction of the spherical machining section of the spherical tool is made by decreasing the radius, in other words, by changing the curvature, and therefore there is a need for precision removal machining with an NC machining apparatus.

Referring to Fig 2C and Fig. 2D, there are shown cross sections perpendicular to a machining trajectory. It is necessary to minimize or remove a cusp amount h by decreasing a pick feed g or increasing the spherical radius of the machining tool. The spherical radius of the machining tool, however, need be equal to or larger than the curvature of the minimum negative (concave) curved surface in the free curved surface in order to prevent a damage to the machined curved surface, which may be caused by a tool interference. Therefore, it leads to a problem that there is no other choice but to select a measure to shift the pick feed g by a half pitch or decrease it, though the machining time thereby increases.

Moreover, while the accuracy of machining position can be improved by decreasing the spherical radius of the machining tool, it leads to a problem that the machining time increases as described above.

### SUMMARY OF THE INVENTION

The present invention has been provided to resolve the above various problems. Specifically, it is an object of the present invention to provide a free curved surface precision machining tool capable of efficiently precision-machining a free curved surface using a versatile 3-axis NC machining apparatus, by dispersing the moving trajectory of the contact surface of a tool machining section and achieving a constant moving speed and driving torque so as to maintain the sharpness of the tool machining section, to achieve uniform wear and a self-correction function thereof, and to decrease the wearing speed, whereby the accuracy of form of the tool machining section can be maintained continuously.

According to the present invention, there is provided a free curved surface precision machining tool for precision-machining a surface to be machined with the lower end in contact therewith by rotation around an axis z, including a drum-shaped tool having a rotation axis x orthogonal to the axis z and rotationally driven around the rotation axis x, the drum-shaped tool having a convex machining surface in the form of an arcuate rotary body obtained by rotating an arc of a radius r with the center at the intersection O between the axis z and the rotation axis x around the rotation axis x, whereby the convex machining surface contacts the surface to be machined to precision-machine the latter, while the convex machining surface is rotated around the orthogonal axis x so as to disperse the machining position of the convex machining surface.

According to a preferred embodiment of the present invention, the radius r is set smaller than the maximum radius R of the convex machining surface from the rotation axis x, whereby the position control of a machining trajectory is performed at the center O of rotation of the arc.

According to another preferred embodiment of the present invention, the radius r is set larger than the maximum radius R of the convex machining surface from the rotation axis x, whereby the position control of a machining trajectory is performed at the center A of the lowest arc.

The convex machining surface of the drum-shaped tool is made of a grindstone or a cutter. The grindstone includes a metal in its bonding material. Moreover, the free curved surface precision machining tool has a non-machining section for protecting the end of the convex machining surface without direct involvement in machining, the non-machining section being adjacent to the convex machining surface of the drum-shaped tool. The non-machining section is made of material wearing out more easily than the grindstone bonding material so as not to damage the surface to be machined and includes a conductive material in its material.

According to a preferred embodiment of the present invention, the free curved surface precision machining tool further includes an impeller disposed on both sides or one side of the drum-shaped tool and a flow channel for emitting a jet of fluid to the impeller in the rotative direction, wherein the drum-shaped tool is rotationally driven around the orthogonal axis x.

According to still another preferred embodiment of the present invention, the free curved surface precision machining tool further includes a belt in contact with the outer peripheral surface of the drum-shaped tool and a pulley for holding the belt between the pulley and the drum-shaped tool, wherein the drum-shaped tool is rotationally driven around the orthogonal axis x by rotation of the belt.

The belt has a polishing surface on the side in contact with the outer peripheral surface so as to correct the convex machining surface of the drum-shaped tool as soon as the drum-shaped tool begins to be rotationally driven.

According to further another preferred embodiment, the free curved surface precision machining tool includes a pulley in contact with the outer peripheral surface of the non-machining section and a belt for rotationally driving the pulley, wherein the drum-shaped tool is rotationally driven around the orthogonal axis x by rotation of the pulley.

According to still another preferred embodiment, the free curved surface precision machining tool includes a driven gear disposed on both sides or one side of the drum-shaped tool and a main driving gear for driving the driven gear, wherein the main driving gear is belt-driven so as to rotationally drive the drum-shaped tool around the orthogonal axis x.

Moreover, the free curved surface precision machining tool includes correction means for correcting the convex machining surface of the drum-shaped tool. The correction means is formed of grindstone, electrolysis, or discharge means or combined means thereof. The correction means functions simultaneously with the machining of material to be machined.

According to the above configuration of the present invention, the free curved surface precision machining tool precision-machines a surface to be machined with the convex machining surface in contact therewith by rotation around the axis z and the convex machining surface is rotated around the orthogonal axis x so as to disperse the machining position of the convex machining surface. Therefore, the free curved surface precision machining tool is capable of efficiently precision-machining a free curved surface using a versatile 3-axis NC machining apparatus by dispersing the moving trajectory of the contact surface of the tool machining section and achieving a constant moving speed and driving torque so as to maintain the sharpness of the tool machining section, to achieve uniform wear and a self-correction function thereof, and to decrease the wearing speed, whereby the accuracy of form of the tool machining section can be maintained continuously.

The above and other objects and advantageous features of the invention will be apparent from the following description taken in connection with the accompanying drawings.

### BRIEF DESCRIPTION OF THE DRAWINGS

Fig. 1 is a schematic diagram of a conventional free curved surface machining tool;
Figs. 2A to 2D are schematic diagrams of conventional machining modes;
Fig. 3 is a diagram showing a wear mode of the conventional tool;
Fig. 4 is a diagram showing a first embodiment of a free curved surface precision machining tool according to the present invention;
Fig. 5 is a diagram showing a second embodiment of the present invention;
Fig. 6 is a diagram showing a third embodiment of the present invention;
Fig. 7 is a diagram showing a fourth embodiment of the present invention;
Figs. 8A and 8B are diagrams for explaining an operation of the present invention;
Figs. 9A and 9B are other diagrams for explaining an operation of the present invention;
Fig. 10 is a diagram showing a fifth embodiment of the present invention;
Fig. 11 is a diagram showing a profile of roughness of a surface machined by the free curved surface precision machining tool of the present invention; and
Fig. 12 is a macrophotograph of the surface machined by the free curved surface precision machining tool of the present invention.

### DESCRIPTION OF THE PREFERRED EMBODIMENTS

Preferred embodiments of the present invention will be described hereinafter with reference to the accompanying drawings. The same reference numerals have been used for similar parts in respective diagrams, with duplicate description omitted.

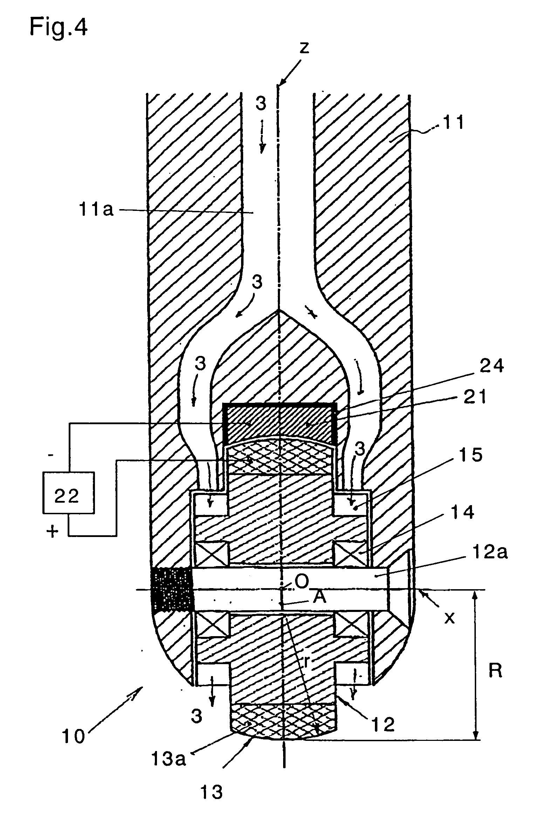

Referring to Fig. 4, there is shown a diagram illustrating a first embodiment of a free curved surface precision machining tool according to the present invention. The free curved surface precision machining tool 10 of the present invention is configured to machine a surface to be machined 2 (see Figs. 1 and 2) with the lower end in contact therewith by rotation around an axis z of a tool body 11. While the following embodiment will be described in a situation where the surface to be machined 2 is located below the free curved surface precision machining tool 10 and is machined at the lower end of the free curved surface precision machining tool 10. However the present invention is not limited thereto, but can be applied directly to an embodiment in which the surface is machined at the horizontal end or upper end of the free curved surface precision machining tool 10 by using it in a horizontal or inverted position.

The free curved surface precision machining tool 10 of the present invention includes a drum-shaped tool 12. The drum-shaped tool 12 is rotatably supported by a support bearing 14 around the orthogonal axis x, which is orthogonal to the vertical axis z in this diagram, and the bearing 14 is supported by a support shaft 12a of the drum-shaped tool 12.

Moreover, the drum-shaped tool 12 has a convex machining surface 13 for machining a surface to be machined with being in contact therewith. The convex machining surface 13 has a form of an arcuate rotary body obtained by rotating an arc of a radius r with the center at the intersection O between the axis z and the rotation axis x around the rotation axis x.

The convex machining section 13a of the drum-shaped tool 12 is a conductive grindstone including a metal in its bonding material in this embodiment, so as to machine the surface to be machined efficiently by being in contact therewith. The convex machining section 13a may be a cutter instead of the grindstone.

Moreover, in this embodiment, the free curved surface precision machining tool 10 according to the present invention includes an impeller 15 disposed on both sides (or one side) of the drum-shaped tool 12 and a via hole 11a for emitting a jet of fluid 3 to the impeller 15 in the rotative direction, so that the drum-shaped tool 12 is rotationally driven around the orthogonal axis x. Although the fluid is preferably conductive grinding fluid in this embodiment, it may be other fluids or compressed air.

In Fig. 4 described above, the impeller 15 is disposed on both sides or one side of the drum-shaped tool 12 and a jet of the fluid 3 is emitted to the impeller 15 in the rotative direction, so that the drum-shaped tool 12 is driven at high speed around the orthogonal axis x. This configuration minimizes the radius of rotation around the axis z of the tool and is free from restriction caused by interference between the material to be machined and the machining tool, thereby achieving a high degree of freedom of the machining trajectory. Therefore, the use of the versatile 3-axis NC machining apparatus can be secured.

Moreover, the free curved surface precision machining tool 10 of the present invention further includes correction means for correcting the convex machining surface 13 of the drum-shaped tool 12. In this embodiment, the correction means is formed of an electrode 21 spaced from the convex machining surface 13, which is a conductive grindstone, and a voltage application unit 22 for applying a pulse voltage to the convex machining surface 13 and the electrode 21. In this diagram, reference numeral 24 is an insulation material.

With this configuration, it is possible to grind the surface to be machined by using the convex machining surface 13 while correcting the surface of the conductive grindstone (the convex machining surface 13) by electrolytic dressing. It should be noted, however, that the correction means of the present invention is not limited to the formation, but can be grindstone, electrolytic, or discharge means or combined means thereof. By the grindstone, electrolytic, discharge or other correction means, preferably the convex machining section 13 in the form of an arcuate rotary body can be corrected during machining of the material to be machined, whereby the precision machining can be continued for a long time.

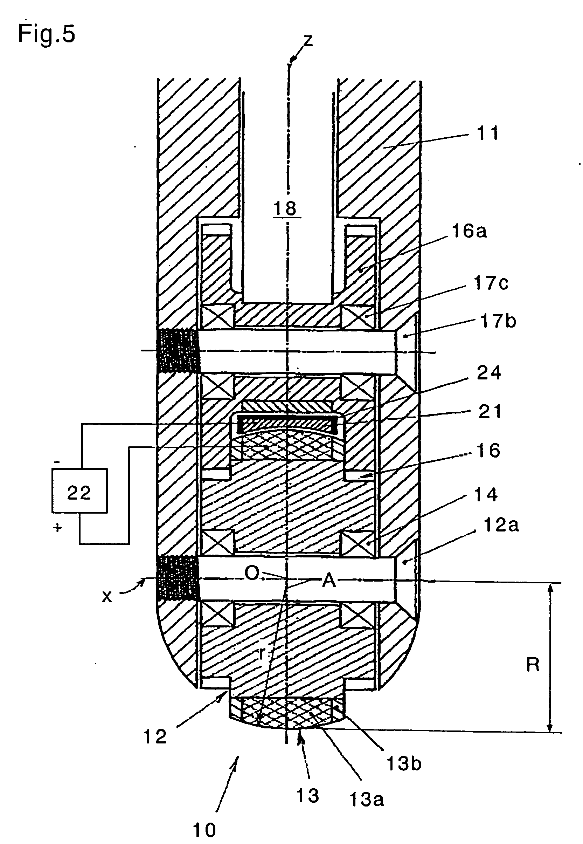

Referring to Fig. 5, there is shown a diagram illustrating a second embodiment of the free curved surface precision machining tool according to the present invention. In this diagram, the free curved surface precision machining tool 10 of the present invention includes a non-machining section 13b adjacent to the convex machining surface 13 of the drum-shaped tool 12. The non-machining section 13b has a function of protecting the end of the convex machining surface 13 and is made of a material wearing out more easily than the grindstone bonding material so as not to damage the surface to be machined, regardless of whether it is directly machined. Alternatively, the non-machining section 13b may include a conductive material in its material, so as to apply a voltage for electrolytic dressing from the surface to be machined (not shown) to the convex machining surface 13 via the non-machining section 13b.

Since the drum-shaped tool 12 rotates around the axis z, it receives machining resistance sideways. Accordingly, if the tool machining section is thin-walled, there is a need for rigidity reinforcement. Therefore, in Fig. 5, there is provided the non-machining section 13b, which is made of the material easily wearing out so as not to damage the bonding material not directly involved in machining and the surface to be machined. The non-machining section 13b preferably includes a conductive material in its material. The drum-shaped tool 12 having the above structure not only prevents an occurrence of vibration, but also further improves precision of the free curved surface precision machining.

Moreover, in this embodiment, the free curved surface precision machining tool 10 of the present invention includes a driven gear 16 disposed on both sides (or one side) of the drum-shaped tool 12 and a main driving gear 16a for driving the driven gear 16. The main driving gear 16a is rotatably supported by a support shaft 17b and a bearing 17c in this embodiment and directly engages with the driven gear 16. Furthermore, the main driving gear 16a is rotationally driven by a belt 18 provided within the tool body 11.

With this configuration, the drum-shaped tool 12 can be rotationally driven around the orthogonal axis x by rotationally driving the main driving gear 16a by using the belt 18. Other respects of the configuration are the same as those in Fig. 4.

In Fig. 5, the gear 16 is disposed in both sides or one side of the drum-shaped tool 12 and the opposite driving gear 16a is engaged therewith, so that the drum-shaped tool 12 is powerfully and reliably driven around the orthogonal axis x. This configuration minimizes the radius of rotation around the axis z of the tool and is free from restriction caused by interference between the material to be machined and the machining tool, thereby achieving a high degree of freedom of the machining trajectory. Therefore, the use of the versatile 3-axis NC machining apparatus can be secured.

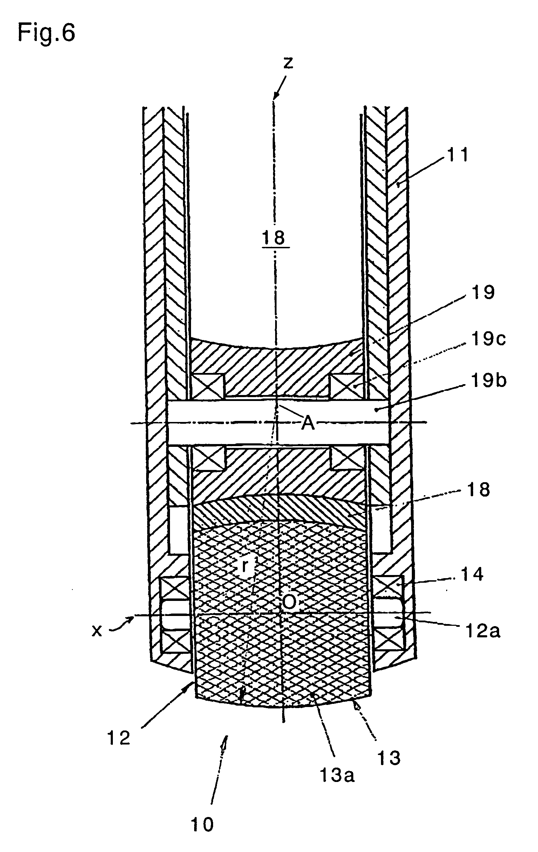

Referring to Fig. 6, there is shown a diagram of a third embodiment of the free curved surface precision machining tool according to the present invention. In this diagram, the free curved surface precision machining tool 10 of the present invention includes a belt 18 in contact with the outer peripheral surface of the drum-shaped tool 12 and a pulley 19 for holding the belt 18 between the pulley 19 and the drum-shaped tool 12. The belt 18 is rotationally driven with being passed through the tool body 11 and the drum-shaped tool 12 is rotationally driven around the orthogonal axis x by rotation of the belt. In this diagram, reference numerals 19b and 19c designate a pulley shaft and a bearing, respectively.

In Fig. 6, the belt 18 and the outer peripheral surface of the pulley 19 are brought into contact with the outer peripheral surface of the drum-shaped tool 12 so as to drive the drum-shaped tool 12 around the orthogonal axis x smoothly. This configuration minimizes the radius of rotation around the axis z of the tool and is free from restriction caused by interference between the material to be machined and the machining tool, thereby achieving a high degree of freedom of the machining trajectory. Therefore, the use of the versatile 3-axis NC machining apparatus can be secured.

Moreover, in this embodiment, the belt 18 has a polishing surface on the side in contact with the outer peripheral surface so as to correct the convex machining surface of the drum-shaped tool simultaneously with the rotational driving. Other respects of the configuration are the same as those in Fig. 4.

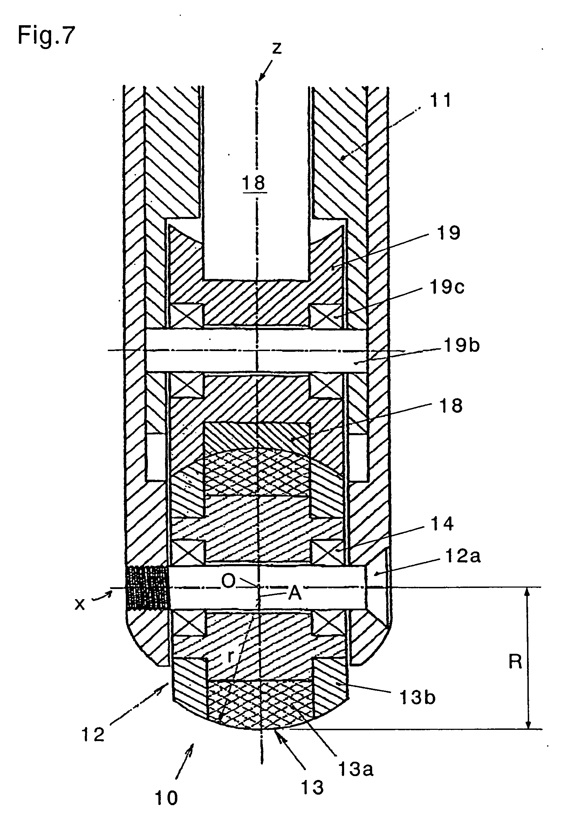

Referring to Fig. 7, there is shown a diagram of a fourth embodiment of the free curved surface precision machining tool according to the present invention. In this embodiment, the free curved surface precision machining tool includes a non-machining section 13b adjacent to the convex machining surface 13 of the drum-shaped tool 12 similarly to the second embodiment and includes a belt 18 and a pulley 19 similarly to the third embodiment. Other respects of the configuration are the same as those in Fig. 4.

With the above configuration, the free curved surface precision machining tool can precision-machine a surface to be machined with the convex machining surface 13 in contact therewith by rotation around the axis z and can disperse the machining position of the convex machining surface 13 by rotating the convex machining surface 13 around the orthogonal axis x.

In Fig. 7, it is also possible to rotationally drive the drum-shaped tool 12 around the orthogonal axis x by rotation of the pulley 19 by bringing the pulley 19 in contact with the outer peripheral surface of the non-machining section 13b and rotationally driving the pulley 19 by the belt 18. The pulley 19 is preferably pressed against the non-machining section 13b by means of biasing means (spring or the like), which is not shown, so as to maintain the frictional force therebetween.

With this configuration, the pulley 19 does not directly contact the convex machining surface 13, thereby reducing wear of the pulley 19.

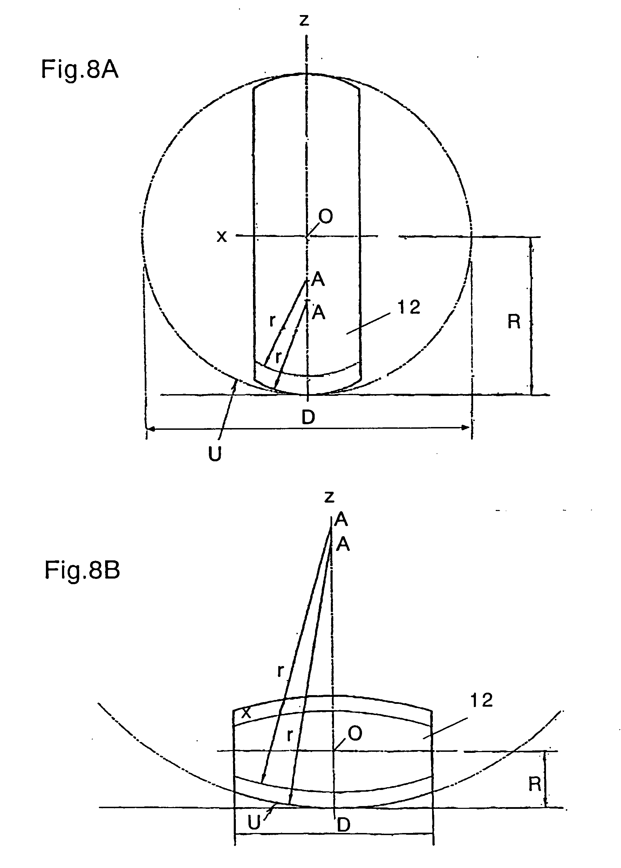

Referring to Figs. 8A and 8E, there are shown diagrams for explaining operations of the present invention, showing side views of the drum-shaped tool 12. Fig. 8A shows an illustration in which the radius r of the arc is smaller than the radius R of the most outer circumference of the arcuate rotary body. A spherical machining surface U has a hemispherical machining range D, whose center is located at the intersection between the axis z and the orthogonal axis x of the drum-shaped tool 12 and at the center O of rotation of the arc. Therefore, the position control of the machining trajectory can be performed at the center O of rotation of the arc.

Referring to Fig. 8B, there is shown an illustration in which the radius r of the arc is larger than the radius R of the most outer circumference of the arcuate rotary body. In this case, the spherical machining surface U has a spherical crown machining range D, whose center is located at the center A of the radius r of the lowest arc on the axis z, at which the position control of the machining trajectory can be performed.

Meanwhile, the radius r of the arc may be set identical with the maximum radius R of the convex machining surface from the rotation axis x. If this is the case, the center O of rotation of the arc is coincident with the center A of the radius of the lowest arc and therefore the position control of the machining trajectory can be performed at the same center.

According to the above configuration of the present invention, the free curved surface precision machining tool 10 rotates the drum-shaped tool 12 located on the lower side thereof around the axis z so as to obtain the spherical machining surface U at the lower end and adds the rotation around the orthogonal axis x so as to obtain a winding moving trajectory of a contact surface e of the convex machining section 13 in the form of the arcuate rotary body.

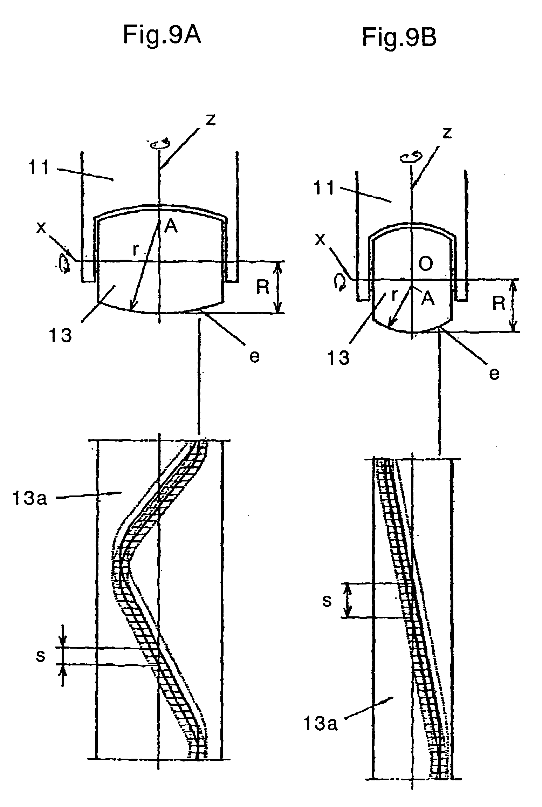

Referring to Fig. 9A and Fig. 9B, there are shown other diagrams for explaining operations of the present invention, typically showing the winding conditions. Fig. 9A shows a situation in which a rotation speed j around the orthogonal axis x is substantially equal to a rotation speed k around the axis z. Fig. 9B shows a situation in which the rotation speed j around the orthogonal axis x is greater than the rotation speed k around the axis z.

There is a difference between an arbitrary time and its subsequent time. It is caused by a difference in rotation angle speed and it disperses the moving trajectory of the contact surface e. Moreover, the fluctuation of the moving speed of the contact surface e is reduced by the combination of the perpendicular speed components. This function allows the convex machining section 13 in the form of an arcuate rotary body to maintain the sharpness, to wear uniformly, and to achieve the self correction function, as well as lowering the wearing speed, thereby successfully maintaining and sustaining the accuracy of form of the convex machining section 13 in the form of arcuate rotary body. Therefore, the free curved surface precision machining tool can precision-machine a free curved surface efficiently by using a versatile 3-axis NC machining apparatus.

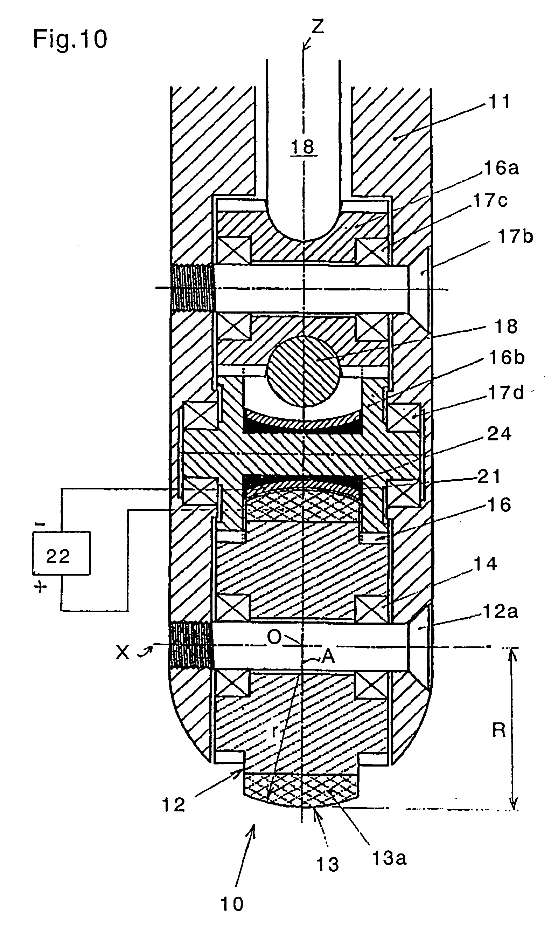

Referring to Fig. 10, there is shown a diagram of a fifth embodiment of the free curved surface precision machining tool according to the present invention. In this embodiment, the free curved surface precision machining tool 10 of the present invention includes a driven gear 16 disposed on both sides (or one side) of a drum-shaped tool 12 and a main driving gear 16a for driving the driven gear 16. The main driving gear 16a is rotationally driven by a belt 18 disposed within a tool body 11. In addition, an intermediate gear 16b, which is rotationally supported by a bearing 17d, between the main driving gear 16a and the driven gear 16.

With this configuration, the main driving gear 16a can be rotationally driven by the belt 18, by which the drum-shaped tool 12 can be rotationally driven around the orthogonal axis x via the intermediate gear 16b.

In addition, a chain can be used instead of the belt in this embodiment. In this diagram, an electrode 21 is placed in the intermediate gear 16b. Other respects of the configuration are the same as those in Fig. 4 and Fig. 5.

According to this embodiment, the following additional effects can be achieved:
(1) Since the belt is not seated on the intermediate gear 16b, the center distance from the driven gear can be decreased. More specifically, the external diameter of the gear can be adjusted to within the outline of the cross section of the tool body.
(2) The diameter of the intermediate gear can be smaller than the external diameter of the driven gear, thereby enabling a reduced transmission, which is advantageous in the aspects of teeth strength, wear, and efficiency.
(3) The degree of freedom in setting a rotation speed of the tool can be increased by a combination of the number of teeth of the intermediate gear. Moreover, with one or two intermediate gears, whether the drum-shaped tool 12 should rotate to the left or right is determined and then a couple of force generated by gyroscopic precession can be used to offset a pressing force against the tool.
(4) The electrode 21 can be placed in the intermediate gear.
(5) The degree of freedom in the shape of cross section of the belt increases. It is also possible to use a chain.

### [First embodiment]

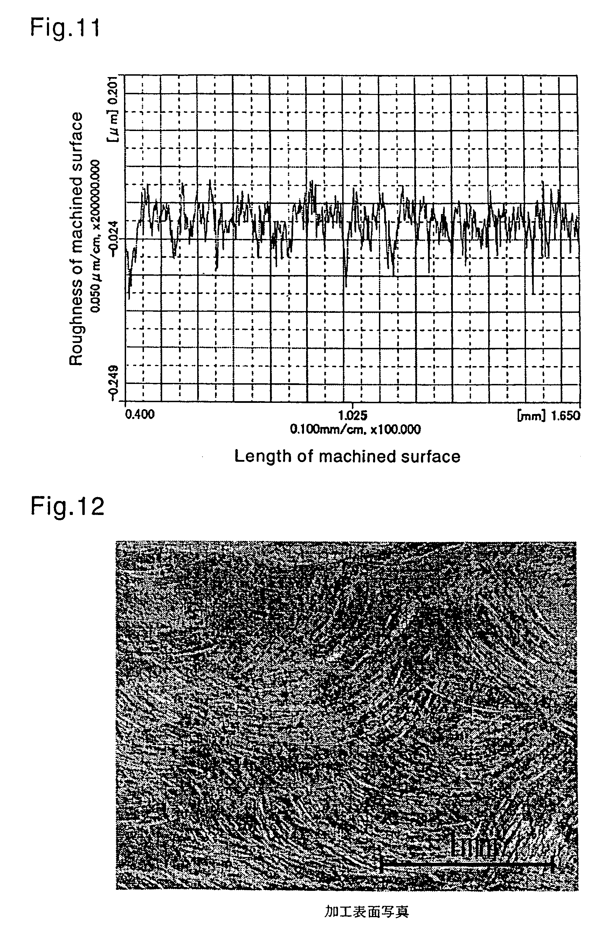

Referring to Fig. 11, there is shown a diagram of a profile of roughness of a surface machined by the free curved surface precision machining tool according to the present invention. Referring to Fig. 12, there is shown a macrophotograph of the machined surface.

The work is made of steel for a molding die (stainless steel HRC 42) and the grindstone is a cast iron bond CBN#4000 grindstone (20 mm in diameter and 8 mm in thickness). The work was machined under the machining conditions listed in Table 1:a spindle rotation speed of 1500 rpm, a feed speed of 100 mm/min, a pitch of 0.1 mm, and a depth of the cut of 10 µm/pass.

**[Table 1] Machining condotions**

| | |
|---|---|
| spindle rotation speed | 1500 rpm |
| feed speed | 100 mm/min |
| pich | 0. 1mm |
| cut depth | 10 µm/pass |

The surface roughness after the machining is 0.0188 µmRa or 0.1392 µmRy as shown in Table 2. From this result, it has therefore been confirmed that an excellent mirror surface can be obtained by using the #4000 grindstone in the free curved surface precision machining tool of the present invention.

**[Table 2] Surface roughness**

| | before machining | after machining |
|---|---|---|
| Ra(µ m) | 0.648 | 0.0188 µ m |
| Ry(µm) | 3.298 | 0.1392 µ m |

It is understood that the present invention is not limited to the above embodiments, but various changes may be made without departing from the gist of the invention.

## Claims

1. A free curved surface precision machining tool for precision-machining a surface to be machined with the lower end in contact therewith by rotation around an axis z, comprising a drum-shaped tool having an orthogonal axis x orthogonal to the axis z and rotationally driven around the orthogonal axis x,
wherein the drum-shaped tool has a convex machining surface in the form of an arcuate rotary body obtained by rotating an arc of a radius r with the center at the intersection O between the axis z and the orthogonal axis x around the orthogonal axis x, whereby the convex machining surface contacts the surface to be machined to precision-machine the latter, while the convex machining surface is rotated around the orthogonal axis x so as to disperse the machining position of the convex machining surface.

2. The free curved surface precision machining tool according to claim 1, wherein the radius r is set smaller than the maximum radius R of the convex machining surface from the orthogonal axis x, whereby the position control of a machining trajectory is performed at the center O of rotation of the arc.

3. The free curved surface precision machining tool according to claim 1, wherein the radius r is set larger than the maximum radius R of the convex machining surface from the orthogonal axis x, whereby the position control 1 of a machining trajectory is performed at the center A of the lowest arc.

4. The free curved surface precision machining tool according to claim 1, wherein the convex machining surface of the drum-shaped tool is made of a grindstone or a cutter.

5. The free curved surface precision machining tool according to claim 4, wherein the grindstone includes a metal in its bonding material.

6. The free curved surface precision machining tool according to claim 1, further comprising a non-machining section for protecting the end of the convex machining surface without direct involvement in machining, the non-machining section being adjacent to the convex machining surface of the drum-shaped tool.

7. The free curved surface precision machining tool according to claim 6, wherein the non-machining section is made of material wearing out more easily than a grindstone bonding material so as not to damage the surface to be machined and includes a conductive material in its material.

8. The free curved surface precision machining tool according to claim 1, further comprising an impeller disposed on both sides or one side of the drum-shaped tool and a flow channel for emitting a jet of fluid to the impeller in the rotative direction, wherein the drum-shaped tool is rotationally driven around the orthogonal axis x.

9. The free curved surface precision machining tool according to claim 1, further comprising a belt in contact with the outer peripheral surface of the drum-shaped tool and a pulley for holding the belt between the pulley and the drum-shaped tool, wherein the drum-shaped tool is rotationally driven around the orthogonal axis x by rotation of the belt.

10. The free curved surface precision machining tool according to claim 9, wherein the belt has a polishing surface on the side in contact with the outer peripheral surface so as to correct the convex machining surface of the drum-shaped tool as soon as the drum-shaped tool begins to be rotationally driven.

11. The free curved surface precision machining tool according to claim 6, further comprising a pulley in contact with the outer peripheral surface of the non-machining section and a belt for rotationally driving the pulley, wherein the drum-shaped tool is rotationally driven around the orthogonal axis x by rotation of the pulley.

12. The free curved surface precision machining tool according to claim 1, further comprising a driven gear disposed on both sides or one side of the drum-shaped tool and a main driving gear for driving the driven gear,
wherein the main driving gear is belt-driven so as to rotationally drive the drum-shaped tool around the orthogonal axis x.

13. The free curved surface precision machining tool according to claim 1, further comprising correction means for correcting the convex machining surface of the drum-shaped tool.

14. The free curved surface precision machining tool according to claim 13, wherein the correction means is formed of grindstone, electrolysis, or discharge means or combined means thereof.

15. The free curved surface precision machining tool according to claim 12, wherein the correction means functions simultaneously with the machining of material to be machined.
